# FASCICULE DE BREVET EUROPEEN

(11) **EP 0 403 321 B1**
(45) Date de publication et mention de la délivrance du brevet: **13.12.1995**
(21) Numéro de dépôt: 90401293.7
(22) Date de dépôt: 16.05.1990
(51) Int. Cl.: B32B 17/10, C03C 27/12, B29C 63/02

(54) **Procédé de fabrication de vitrage feuilleté asymétrique par calandrage et ruban préfabriqué pour la mise en oeuvre**
Verfahren zur Herstellung von asymmetrischen Verbundglasscheiben durch Kalendrierung und vorgefertigtes Band für die Durchführung
Method for making asymmetric laminated glass by calendrage and prefabricated tape for carrying out the method

(30) Priorité: 17.05.1989 FR 8906389
(43) Date de publication de la demande: 19.12.1990
(73) Titulaire: SAINT-GOBAIN VITRAGE, 92400 Courbevoie (FR)
(72) Inventeur: Moncheaux, Michel, F-60200 Compiègne (FR); Triffaux, Francis, F-60150 Thourotte (FR)
(74) Mandataire: Muller, René

(56) Documents cités:
- EP-A- 0 137 522
- DE-A- 2 907 927
- US-A- 4 174 076
- US-A- 4 502 910

## Description

L'invention est relative à la fabrication des vitrages feuilletés asymétriques formés d'un support rigide monolithique ou feuilleté et d'une feuille de matière plastique souple ayant les propriétés désirées. Plus particulièrement, l'invention concerne l'assemblage de la feuille de matière plastique souple avec le support rigide, ainsi qu'un ruban continu préfabriqué comprenant la feuille de matière plastique souple, utilisée pour ledit assemblage.

L'assemblage du support rigide avec la feuille souple pour constituer le vitrage feuilleté s'effectue généralement par un pressage préliminaire du support avec la feuille par calandrage, suivi d'un cycle d'autoclave mettant en jeu la température et la pression qui améliore l'adhésion entre les éléments constitutifs et assure ainsi un assemblage définitif.

On a déjà proposé dans la publication de brevet européen 0 015 209 un dispositif comprenant des moyens inférieurs de pressage, notamment une série de galets disposés les uns à côté des autres, des moyens supérieurs de pressage comprenant un rouleau presseur cylindrique souple, s'étendant sur une longueur au moins égale à la largeur des éléments à assembler, ce rouleau souple étant maintenu suivant la courbure désirée par des moyens supérieurs s'appuyant sur lui, l'ensemble des éléments de pressage étant monté sur un cadre pivotant.

La feuille souple qui est assemblée avec le support rigide par mise en oeuvre de ce dispositif doit se présenter sous la forme d'un ruban continu pour pouvoir être maintenue dans la position désirée pour l'assemblage qui s'effectue au défilé.

Malheureusement, dans ce type d'assemblage au défilé, il n'est pas possible de présenter les supports rigides à revêtir les uns à la suite des autres sans intervalles de séparation, surtout lorsqu'il s'agit de vitrages cintrés dans le sens du défilement qui correspond généralement à la courbure dans le sens de la longueur du vitrage. Dans ce cas l'opération d'assemblage utilise le basculement du cadre pivotant au fur et à mesure de l'avance du vitrage entre les éléments de pressage, afin d'assurer un pressage sensiblement perpendiculaire à la surface du vitrage durant toute l'opération.

La position du cadre pivotant en sortie d'un vitrage est généralement symétrique par rapport à un plan vertical à la position du cadre de basculement en entrée d'un vitrage, de sorte qu'entre la sortie d'un vitrage et l'entrée du vitrage suivant, le cadre doit basculer dans l'autre sens pour revenir à sa position de début d'assemblage.

Il est donc nécessaire de séparer deux supports rigides consécutifs d'un intervalle au moins égal à la distance qui correspond à l'avance des vitrages durant le temps de basculement en retour du cadre. Cet intervalle correspond donc aussi à une perte de matière en feuille souple.

En outre, dans le cas des vitrages automobiles, la surface développée du vitrage présente une forme approximativement trapézoïdale, ce qui entraîne d'autres pertes en feuille souple, en particulier toute la partie comprise entre les contours du trapèze que l'on appelle primitif et le rectangle dans lequel le primitif est inscrit.

Les différentes pertes de matière peuvent au total constituer 30 % environ de la surface de la feuille.

L'invention propose un procédé pour l'assemblage des vitrages asymétriques formé d'un support rigide et d'une feuille souple, à partir d'un ruban continu, qui réduit fortement les pertes de matière en feuille souple.

Selon le procédé de l'invention, on présente au dispositif d'assemblage un ruban continu formé d'un film souple support, en papier, ou en une matière plastique peu onéreuse, sur lequel on a placé des primitifs préparés ou découpés au préalable à la forme géométrique désirée, ces primitifs étant disposés régulièrement et de façon séparée les uns des autres. Généralement, la distance de séparation entre deux primitifs est au moins égale à celle correspondant à l'avance du film durant le temps mis par le dispositif d'assemblage pour passer de la position sortie d'un vitrage à la position entrée du vitrage suivant.

Le temps mis par le dispositif pour changer de position correspond au temps de basculement en retour lorsque le dispositif est équipé d'un cadre basculant.

Bien entendu, les primitifs doivent adhérer suffisamment au film support pour que l'ensemble puisse être enroulé ou déroulé, mais pas trop, afin qu'ils puissent se détacher du film support pour l'assemblage.

L'invention concerne aussi le ruban souple préfabriqué constitué du film support et des primitifs régulièrement disposés sur celui-ci.

Pour constituer ce ruban souple préfabriqué, plusieurs variantes peuvent être envisagées selon l'invention.

Dans une première réalisation, on peut fabriquer la feuille de matière plastique par format en utilisant en tant que support de formation un lit continu formé de trapèzes disposés tête bêche. Lorsqu'on retire la feuille de matière plastique du support de formation, on obtient directement les primitifs trapézoïdaux. Ceux-ci sont alors placés régulièrement et avec une même orientation sur le film support pour former le ruban préfabriqué qui sera utilisé pour l'assemblage ultérieur par calandrage.

Dans une variante, on fabrique la feuille souple en utilisant un support de formation continu, en verre, ou en métal, comme décrit par exemple dans les publications des brevets français 2 230 487, ou 2 549 414, ou sur un support souple tendu comme décrit par exemple dans la publication de brevet français 2 480 669. La feuille de matière plastique continue ainsi fabriquée est découpée en primitifs après avoir été retirée du support de formation ou découpée avec le support lui-même lorsque celui-ci est un support souple tendu et qu'il fait partie de la feuille fabriquée qui est alors une feuille composite.

Les primitifs obtenus sont alors disposés comme précédemment de façon régulière et selon une même orientation sur le film support afin de constituer le ruban préfabriqué qui sera utilisé pour l'assemblage.

D'autres caractéristiques et avantages de l'invention apparaîtront dans la description suivante faite en relation avec les figures.
La figure 1 représente schématiquement le ruban continu préfabriqué utilisé selon l'invention pour l'assemblage par calandrage.
Les figures 2, 3 et 4 représentent schématiquement le principe du calandrage selon l'invention avec utilisation d'un ruban continu préfabriqué comme représenté sur la figure 1.

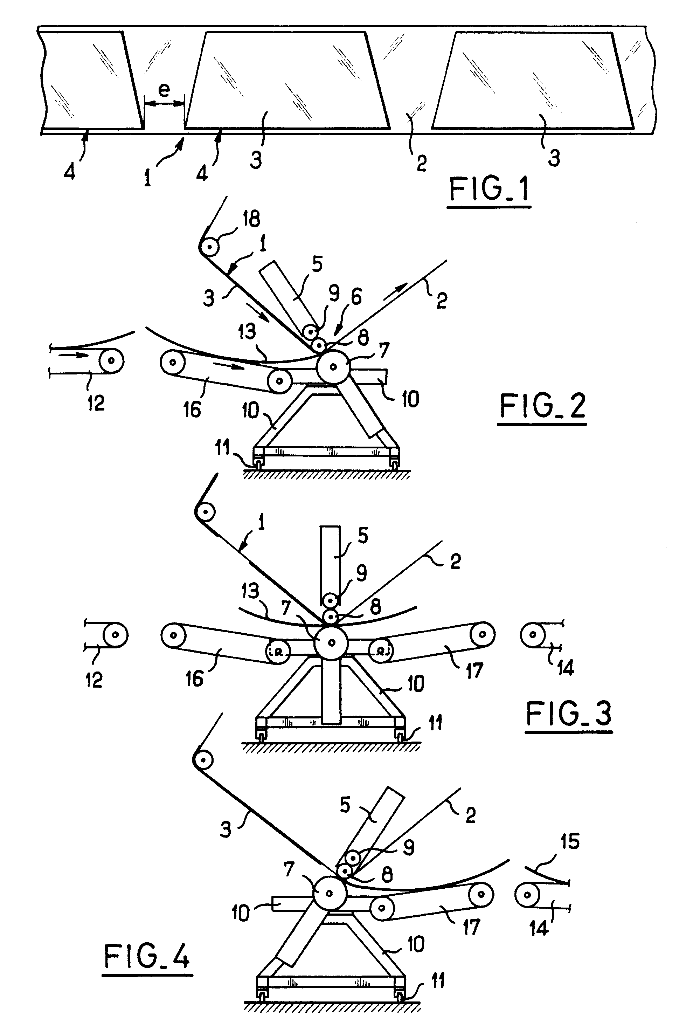

La figure 1 représente le ruban continu préfabriqué 1 formé d'un film support 2 par exemple en papier ou en matière plastique peu onéreuse, et de primitifs 3 en matière plastique de haute qualité optique destinés à recouvrir des supports monolithiques ou feuilletés pour former des vitrages feuilletés de sécurité.

Ces primitifs se présentent sous la forme de trapèze et ils sont disposés régulièrement les uns à la suite des autres en étant espacés d'une distance suffisante pour permettre l'assemblage par calandrage de vitrages bombés de façon successive. Ainsi, la distance e entre deux grandes bases 4 de deux trapèzes consécutifs est d'environ 15 cm dans le cas de pare-brise de véhicule automobile, par exemple.

Pour former le ruban continu 1, on fabrique au préalable les primitifs 3 de matière plastique généralement dans un procédé en continu. Les feuilles de matière plastique sont par exemple des feuilles à une ou plusieurs couches en polyuréthane, telles que celles décrites par exemple dans les publications de brevets français 2 351 917 ou européen EP 0 133 090.

Lorsqu'elles sont associées à un support monolithique en verre, ces feuilles comprennent généralement deux couches de polyuréthane : une couche ayant des propriétés d'absorbeur d'énergie et une couche ayant des propriétés de surface, notamment de résistance à la rayure et à l'abrasion. Ces feuilles à base polyuréthane sont obtenues généralement par coulée sur un support plan défilant de façon continue sous le dispositif pour l'apport de la matière apte à former la ou les couches. La feuille de matière plastique obtenue est retirée du support de formation soit directement sous la forme de primitifs trapézoïdaux lorsque le support de formation est constitué lui-même de trapèzes disposés tête-bêche pour former un lit continu, soit sous la forme d'une feuille continue qui peut être enroulée et stockée, puis découpée en primitifs, ou découpée directement en primitifs.

Les primitifs obtenus sont alors disposés sur le film support 2, de façon régulière, comme décrit précédemment. On obtient un ruban préfabriqué 1 qui peut être utilisé dans une ligne de calandrage pour la fabrication des vitrages de sécurité. Sur la figure 1 on a représenté un film support dont la largeur est de préférence légèrement plus importante que la hauteur des primitifs. Les primitifs peuvent ainsi être parfaitement supportés par le film et protégés par celui-ci dans un enroulement. Le film support est légèrement adhérent pour pouvoir assurer le maintien des primitifs quelle que soit la position du ruban préfabriqué.

Sur les figures 2, 3 et 4 on a représenté un assemblage par calandrage utilisant le ruban préfabriqué selon l'invention. Le dispositif d'assemblage mis en oeuvre est par exemple celui décrit dans la publication de brevet européen 0 015 209 déjà cité. Ce dispositif comprend un cadre 5 pivotant autour d'un axe horizontal disposé transversalement par rapport à la ligne d'assemblage. Ce cadre pivotant porte les moyens de pressage 6 formés des moyens de pressage inférieurs, par exemple une série de galets 7, des moyens de pressage supérieurs comprenant un rouleau presseur cylindrique souple 8 et une série de galets supérieurs 9 s'appuyant sur lui pour lui donner la courbure désirée qui, ici, est la courbure transversale des vitrages à assembler. Le cadre mobile est monté sur un bâti 10, qui peut être, le cas échéant, déplacé transversalement, en étant disposé sur des roulettes 11.

Le dispositif de calandrage est disposé entre un convoyeur amont 12 à rouleaux ou courroies qui amène le support à recouvrir 13, généralement une feuille de verre bombée, et un convoyeur aval 14 qui réceptionne et éloigne les supports recouverts constituant les vitrages feuilletés 15. La partie d'extrémité 16 du convoyeur amont et la partie d'extrémité 17 du convoyeur aval sont inclinées par rapport à l'horizontale de façon à amener ou à réceptionner le bord des supports 13 perpendiculairement au plan de pressage sans qu'il soit nécessaire d'incliner fortement le cadre pivotant.

Le ruban préfabriqué 1 décrit précédemment est amené par le dessus du dispositif dans le sens indiqué par les flèches, tout en étant maintenu tendu par un rouleau supérieur de tension 18.

Lorsque le support à recouvrir arrive sur le convoyeur amont incliné 16 dans le sens indiqué par les flèches, on fait pivoter le cadre mobile 5 pour incliner vers l'amont la partie supérieure du cadre afin que le bord relevé du support 13 à recouvrir puisse se présenter perpendiculairement au plan de pressage.

Bien entendu, l'approche du support à recouvrir 13 est synchronisée avec l'approche du primitif 3 qui sera utilisé dans l'opération d'assemblage avec le support 13 pour constituer le vitrage 15, les vitesses d'avance du support et du primitif étant identiques.

Le support 13 est entraîné par les galets inférieurs 7 et le primitif 3 par le rouleau presseur 8 qui le presse en tous points sur le support 13. En même temps qu'il est assemblé avec le support à recouvrir, le primitif 3 se détache du film support 2 qui est maintenu tendu et qui est tiré par un dispositif annexe non représenté.

Le cadre 5 pivote pour atteindre la position verticale correspondant à la moitié de l'opération d'assemblage, puis sa partie supérieure s'incline vers le convoyeur aval 17 pour la dernière partie de l'opération d'assemblage. Le vitrage fabriqué 15 est réceptionné par le convoyeur aval.

Lorsqu'un vitrage sort du dispositif, le cadre mobile 5 bascule en retour pour retrouver la position du début d'assemblage pour le vitrage suivant.

Entre le moment où le vitrage précédent est sorti du pressage et le moment où le suivant entre dans l'axe de pressage, le ruban préfabriqué 1 a continué son avance sur une distance correspondant à la séparation entre les deux primitifs consécutifs.

Et on recommence l'opération d'assemblage pour un nouveau vitrage.

A la sortie de l'opération d'assemblage, l'adhésion entre le primitif et le support rigide du vitrage peut être amélioré par un cycle d'autoclave.

Lorsque l'assemblage définitif est réalisé, le primitif est découpé aux contours adéquats du vitrage.

## Revendications

1. Procédé pour l'assemblage d'un vitrage feuilleté asymétrique formé d'un support rigide et d'une feuille de matière plastique souple, par calandrage, dans lequel la feuille à assembler au support est amenée pour l'assemblage sous la forme d'un ruban continu, caractérisé en ce que la feuille de matière plastique souple se présente en forme de primitifs disposés régulièrement et de façon espacée sur un film support continu.

2. Procédé selon la revendication 1, caractérisé en ce que les primitifs présentent une forme sensiblement trapézoïdale, leurs bases étant disposées parallèlement à l'axe du film support.

3. Procédé selon la revendication 2, caractérisé en ce que les primitifs sont séparés d'une distance au moins égale à celle correspondant à l'avance du film durant le temps mis par le dispositif d'assemblage pour passer de la position sortie d'un vitrage à la position entrée du vitrage suivant.

4. Procédé selon une des revendications 1 à 3, caractérisée en ce que les primitifs sont découpés à partir d'une feuille continue.

5. Procédé selon une des revendications 1 à 3, caractérisé en ce que les primitifs sont formés directement sur des supports trapézoïdaux disposés tête-bêche pour former un lit continu.

6. Ruban souple préfabriqué comprenant un film support et des primitifs en matière plastique de haute qualité optique disposés régulièrement et de façon espacée sur le film support, notamment pour la mise en oeuvre du procédé selon une des revendications 1 à 5.

7. Ruban souple selon la revendication 6, caractérisé en ce que les primitifs sont formés à partir d'une feuille comprenant au moins une couche de polyuréthane.

8. Ruban souple selon la revendication 7, caractérisé en ce que la feuille comprend une couche de polyuréthane ayant des propriétés d'absorbeur d'énergie et une couche de polyuréthane ayant des propriétés de surface.

9. Ruban souple selon une des revendications 6 ou 7, caractérisé en ce que les primitifs sont découpés à partir d'une feuille continue.

10. Ruban souple selon une des revendications 6 ou 7, caractérisé en ce que les primitifs sont obtenus directement par formation sur un lit continu de supports trapézoïdaux disposés tête-bêche.

## Claims

1. A method of assembling an asymmetric laminated pane formed of a rigid support and of a sheet of flexible plastics material, by calendering, in which the sheet to be assembled to the support is brought for the assembling in the form of a continuous band, characterized in that the sheet of flexible plastics material is present in the form of blanks disposed uniformly and spaced apart on a continuous support film.

2. A method according to Claim 1, characterized in that the blanks have a substantially trapezoidal shape, their bases being disposed parallel to the axis of the support film.

3. A method according to Claim 2, characterized in that the blanks are separated by a distance at least equal to that corresponding to the advance of the film during the time spent by the assembling apparatus in passing from the exit position of a pane to the entry position of the next pane.

4. A method according to one of Claims 1 to 3, characterized in that the blanks are cut from a continuous sheet.

5. A method according to one of Claims 1 to 3, characterized in that the blanks are formed directly on trapezoidal supports disposed head-to-tail to form a continuous bed.

6. Prefabricated flexible band comprising a support film and blanks of plastics material of high optical quality, disposed uniformly and spaced apart on the support film, notably for carrying out the method according to one of Claims 1 to 5.

7. Flexible band according to Claim 6, characterized in that the blanks are formed from a sheet comprising at least one layer of polyurethane.

8. Flexible band according to Claim 7, characterized in that the sheet comprises a layer of polyurethane having energy-absorber properties and a layer of polyurethane having surface properties.

9. Flexible band according to one of Claims 6 or 7, characterized in that the blanks are cut from a continuous sheet.

10. Flexible band according to one of Claims 6 or 7, characterized in that the blanks are obtained directly by forming on a continuous bed of trapezoidal supports disposed head-to-tail.

## Patentansprüche

1. Verfahren zur Herstellung einer asymmetrischen Verbundverglasung, die aus einem starren Träger und einer nachgiebigen Kunststoffolie gebildet ist, durch Kalandrieren, in welchem die mit dem Träger zu verbindende Folie zu diesem Zweck in Form eines endlosen Bandes zugeführt wird, **dadurch gekennzeichnet**, **daß** die nachgiebige Kunststoffolie in Form von Bauteilen vorliegt, die regelmäßig und mit Abstand voneinander auf einer endlosen Trägerfolie angeordnet sind.

2. Verfahren nach Anspruch 1, **dadurch gekennzeichnet, daß** die Bauteile im wesentlichen die Form eines Trapezes besitzen, wobei ihre Grundlinien parallel zur Achse der Trägerfolie angeordnet sind.

3. Verfahren nach Anspruch 2, **dadurch gekennzeichnet, daß** die Bauteile durch einen Abstand voneinander getrennt sind, der wenigstens gleich dem ist, welcher der Fortbewegung der Folie während des Zeitraums entspricht, den die Verbindungsvorrichtung benötigt, um von der Ausgangsposition einer Verglasung zur Eintrittsposition der folgenden Verglasung überzugehen.

4. Verfahren nach einem der Ansprüche 1 bis 3, **dadurch gekennzeichnet, daß** die Bauteile aus einer endlosen Folie zugeschnitten sind.

5. Verfahren nach einem der Ansprüche 1 bis 3, **dadurch gekennzeichnet, daß** die Bauteile direkt auf trapezförmigen Trägern gebildet werden, die verkehrt gegeneinander angeordnet sind, damit sie ein endloses Bett bilden.

6. Vorgefertigtes nachgiebiges Band, das eine Trägerfolie und Kunststoffbauteile hoher optischer Qualität umfaßt, die insbesondere für die Durchführung des Verfahrens nach einem der Ansprüche 1 bis 5 regelmäßig und mit Abstand voneinander auf der Trägerfolie angeordnet sind.

7. Nachgiebiges Band nach Anspruch 6, **dadurch gekennzeichnet, daß** die Bauteile ausgehend von einer Folie gebildet sind, die wenigstens eine Polyurethanschicht enthält.

8. Nachgiebiges Band nach Anspruch 7, **dadurch gekennzeichnet, daß** die Folie eine Polyurethanschicht mit energieabsorbierenden Eigenschaften und eine Polyurethanschicht mit Oberflächeneigenschaften enthält.

9. Nachgiebiges Band nach Anspruch 6 oder 7**, dadurch gekennzeichnet, daß** die Bauteile aus einer endlosen Folie zugeschnitten sind.

10. Nachgiebiges Band nach Anspruch 6 oder 7, **dadurch gekennzeichnet, daß** die Bauteile direkt durch Bildung auf einem endlosen Bett aus verkehrt gegeneinander angeordneten trapezförmigen Trägern hergestellt sind.
